# EUROPÄISCHE PATENTANMELDUNG

(11) **EP 4 276 014 A1**
(43) Veröffentlichungstag der Anmeldung: **15.11.2023**
(21) Anmeldenummer: 22173192.0
(22) Anmeldetag: 13.05.2022
(51) Int. Cl.: B64C 39/02, B64D 47/00, B25J 11/00

(54) **BAUARBEITSDROHNE UND VERFAHREN ZUR AUSFÜHRUNG VON BAUARBEITEN**

(71) Anmelder: Hilti Aktiengesellschaft, 9494 Schaan (LI)
(72) Erfinder: Kötter, Till, 8048 Zürich (CH); Mathis, Timon, 8124 Maur (CH); Arranhado, Alina, 8046 Zürich (CH); Küster, Timo, 9463 Oberriet (CH); Roth, Yann, 5504 Othmarsingen (CH); Biffar, Friederike, 8003 Zürich (CH); Dautzenberg, Roman, 3047 Muri bei Bern (CH); Steinauer, Curdin, 7014 Trin (CH)
(74) Vertreter: Hilti Aktiengesellschaft Corporate Intellectual Property

(57) **Zusammenfassung**

Die Erfindung betrifft eine **Bauarbeitsdrohne** (10) zur Ausführung einer Bauarbeit an einem Baustellenobjekt. Sie umfasst eine Flugplattform (12), ein an der Flugplattform (12) angeordneter und / oder ausgebildeter Endeffektor (18), wobei der Endeffektor (18) eine Werkzeugaufnahme (24) zur Aufnahme eines Arbeitswerkzeugs (23) aufweist, wobei die Bauarbeitsdrohne (10) ein Justierelement mit wenigstens einem einstellbaren Freiheitsgrad aufweist, das eingerichtet ist, eine relative Position und / oder Lage zwischen der Werkzeugaufnahme (24) und der Flugplattform (12) einzustellen, und ein Fixationselement (30), das eingerichtet ist, das Baustellenobjekt zumindest temporär so zu kontaktieren, dass wenigstens der Endeffektor (18) oder die Werkzeugaufnahme (24) relativ zum Baustellenobjekt in wenigstens einem Freiheitsgrad zumindest temporär, vorzugsweise während einer Ausführung der Bauarbeit, festgelegt ist. Die Erfindung betrifft ferner ein Verfahren (1000) zur Ausführung einer Bauarbeit. Die Erfindung ermöglicht es, Bauarbeiten in selbst in großen Höhen an Decken oder Wänden auszuführen.

## Beschreibung

Die Erfindung betrifft eine Bauarbeitsdrohne zur Ausführung einer Bauarbeit an einem Baustellenobjekt, umfassend eine Flugplattform und ein an der Flugplattform angeordneter und / oder ausgebildeter Endeffektor, wobei der Endeffektor ein Arbeitswerkzeug und / oder eine Werkzeugaufnahme zur Aufnahme eines Arbeitswerkzeugs aufweist.

Bauarbeiten in großen Höhen erfordern zumeist umfangreiche und kostenaufwändige Vorbereitungen. Beispielsweise müssen oftmals Gerüste errichtet werden, um überhaupt eine gewünschte Arbeitsposition erreichen zu können. Manche Arbeitspositionen, beispielsweise an Brückenunterseiten oder an Außenseiten von hohen Gebäuden sind auf herkömmlichem Wege bislang nahezu unerreichbar.

Bauarbeiten sind häufig mit einer hohen Positionsgenauigkeit auszuführen.

Auch werden oftmals schwere Werkzeugmaschinen benötigt. Diese erfordern häufig starke Anpresskräfte, mit denen die Werkzeugmaschinen und die Arbeitswerkzeuge an das zu bearbeitende Baustellenobjekt angepresst werden müssen.

Es sind bereits Versuche unternommen worden, derartige Bauarbeiten, beispielsweise Bohrarbeiten, mithilfe von Drohnen, also unbemannten Flugobjekten, auszuführen. Diese Versuche sind jedoch im Allgemeinen bislang wenig erfolgreich und insbesondere auf sehr spezifische, einfache Verhältnisse, beispielsweise auf das Bohren von Bohrlöchern geringen Durchmessers in dünne Holz- oder Gipselemente, beschränkt.

Wünschenswert ist es daher, auch schwere Bauarbeiten, beispielsweise eine Bearbeitung von Stahlbeton, in großen Höhen kostengünstig und schnell ausführen zu können. Besonders wünschenswert ist es dabei, wenn Bauarbeiten in unterschiedlichen Lagen, insbesondere sowohl an Decken als auch an Wänden, ausgeführt werden können.

Aufgabe der vorliegenden Erfindung ist es, ein Gerät und ein Verfahren zur Ausführung von Bauarbeiten zur Verfügung zu stellen, durch die selbst schwere Bauarbeiten auch in großen Höhen mit geringem Vorbereitungsaufwand ausgeführt werden können.

Gelöst wird die Aufgabe durch eine **Bauarbeitsdrohne** zur Ausführung einer Bauarbeit an einem Baustellenobjekt, insbesondere einer Wand und / oder einer Decke, umfassend eine Flugplattform, ein an der Flugplattform angeordneter und / oder ausgebildeter Endeffektor, wobei der Endeffektor eine Werkzeugaufnahme zur Aufnahme eines Arbeitswerkzeugs aufweist, wobei die Bauarbeitsdrohne ein Justierelement mit wenigstens einem einstellbaren Freiheitsgrad aufweist, wobei das Justierelement eingerichtet ist, eine relative Position und / oder Lage zwischen der Werkzeugaufnahme und der Flugplattform einzustellen, und wobei die Bauarbeitsdrohne ein Fixationselement aufweist, das eingerichtet ist, das Baustellenobjekt zumindest temporär so zu kontaktieren, dass wenigstens der Endeffektor oder die Werkzeugaufnahme relativ zum Baustellenobjekt in wenigstens einem Freiheitsgrad zumindest temporär, vorzugsweise während einer Ausführung der Bauarbeit, festgelegt ist.

Dem liegt unter anderem der Gedanke zugrunde, dass sich zur Ausführung der Bauarbeit die Bauarbeitsdrohne zunächst dem Baustellenobjekt nähern, insbesondere dieses anfliegen, kann. Sobald sie das Baustellenobjekt erreicht, kann sie sich zumindest temporär mit Hilfe des Fixationselements am Baustellenobjekt festlegen. Sollte die angeflogene Position nicht hinreichend zu einer gewünschten Arbeitsposition, an der die Bauarbeit auszuführen ist, korrespondieren, kann die Position zumindest der Werkzeugaufnahme - und somit auch eines in der Werkzeugaufnahme aufgenommenen Arbeitswerkzeugs - mittels des Justierelements korrigiert werden. Das Arbeitswerkzeug kann dann an der Arbeitsposition auf das Baustellenobjekt gerichtet und diesem angenähert werden, sodass die gewünschte Bauarbeit ausgeführt werden kann.

Das Baustellenobjekt kann beispielsweise eine Wand oder eine Decke sein. Unter einer Decke kann ein Baustellenobjekt verstanden werden, das eine horizontal oder zumindest im Wesentlichen, insbesondere im Rahmen üblicher Produktionsungenauigkeiten, horizontal ausgerichtete und vertikal von unten erreichbare Oberfläche aufweist. Unter einer Wand kann ein Baustellenobjekt verstanden werden, das eine vertikal oder zumindest im Wesentlichen, insbesondere im Rahmen üblicher Produktionsungenauigkeiten, vertikal ausgerichtete und horizontal erreichbare Oberfläche aufweist.

Allgemein kann es sich bei dem Baustellenobjekt beispielsweise um ein Baustellenobjekt einer Hochbau-Baustelle oder einer Tiefbau-Baustelle, einer Schiffbau-Baustelle oder einer Baustelle an einer Stahlkonstruktion, beispielsweise einer Ölbohrplattform, handeln.

Die Werkzeugaufnahme kann zur reversiblen Aufnahme, insbesondere zur werkzeuglosen Aufnahme und / oder Entnahme, eines Arbeitswerkzeugs ausgebildet sein. Dann kann das Arbeitswerkzeug, z. B. verschleißbedingt, ausgetauscht werden. Die Werkzeugaufnahme kann auch ausgebildet sein, unterschiedliche Arten von Arbeitswerkzeugen aufzunehmen, sodass die Bauarbeitsdrohne besonders vielseitig verwendbar ist. Denkbar ist auch, dass die Werkzeugaufnahme fest, insbesondere nicht werkzeuglos lösbar, mit dem Arbeitswerkzeug verbunden ist.

Die Bauarbeit kann eine Bohren, Trennen, insbesondere Meißeln oder Sägen, Schleifen und / oder Pressen, beispielsweise zur Verbindung zweier Stahlteile miteinander, beispielsweise zur Verbindung zweier Armierungseisen miteinander, umfassen. Dazu kann das in die Werkzeugaufnahme aufgenommene und / oder aufnehmbare Arbeitswerkzeug beispielsweise ein Bohrwerkzeug, ein Meißelwerkzeug, ein Sägewerkzeug, ein Schleifwerkzeug oder ein Presswerkzeug sein. Denkbar ist insbesondere, dass am Endeffektor eine Werkzeugmaschine, beispielsweise eine elektrische Werkzeugmaschine, montiert ist. Die Werkzeugmaschine kann die Werkzeugaufnahme aufweisen und insbesondere diese antreiben. In der Werkzeugaufnahme kann das Arbeitswerkzeug aufgenommen und / oder aufnehmbar sein.

Unter einem einstellbaren Freiheitsgrad eines Elements der Bauarbeitsdrohne kann eine Möglichkeit einer Relativbewegung zumindest eines Teils des Elements in einer Dimension relativ zu wenigstens einem anderen, prinzipiell unbewegten, Teil der übrigen Bauarbeitsdrohne verstanden werden, wobei die Bewegung aktiv steuerbar, beispielsweise mit Hilfe eines Stellmotors, ist. Es kann sich dabei beispielsweise um eine Translationsbewegung oder eine Rotationsbewegung handeln. Nicht als prinzipiell unbewegte Teile können dabei Rotoren, und / oder Statoren von Motoren sowie Propeller etc. gelten.

Vorzugsweise weist das Justierelement wenigstens zwei einstellbare Freiheitsgrade auf. Dann lässt sich die Position der Werkzeugaufnahme in wenigstens zwei Dimensionen aktiv einstellen. Beispielsweise kann die Position des Arbeitswerkzeugs und / oder der Werkzeugaufnahme innerhalb eines bestimmten Flächenbereichs entlang der Oberfläche des Baustellenobjekts justiert werden. Alternativ oder ergänzend kann auch unter Umständen ein Abstand des Arbeitswerkzeugs vom Baustellenobjekt oder eine Eindringtiefe des Arbeitswerkzeugs in das Baustellenobjekt einstellbar sein.

Allgemein kann das Justierelement eingerichtet sein, eine relative Position und / oder Lage zwischen dem Arbeitswerkzeug und der Flugplattform mit wenigstens zwei einstellbaren Freiheitsgraden einzustellen. Die zwei Freiheitsgrade können beispielsweise eine zu dem Baustellenobjekt parallele oder zumindest im Wesentlichen parallel verlaufende Ebene aufspannen. Somit kann zumindest das Arbeitswerkzeug relativ zur Flugplattform und damit, wenn die Bauarbeitsdrohne über das Fixationselement relativ zum Baustellenobjekt festgelegt ist, auch relativ zum Baustellenobjekt verlagert werden.

Das Justierelement kann einen Arm aufweisen. Beispielsweise kann das Justierelement einen Parallelmanipulator, insbesondere einen Deltamanipulator, aufweisen. Alternativ oder ergänzend kann das Justierelement auch einen Roboterarm, insbesondere einen mehrachsigen Roboterarm, aufweisen.

Denkbar ist alternativ oder ergänzend, dass das Justierelement einen Kreuztisch aufweist. Der Kreuztisch kann wenigstens zwei Linearführungssysteme aufweisen.

Das Fixationselement kann an der übrigen Bauarbeitsdrohne über ein Gelenk angelenkt sein. Dadurch kann die Bauarbeitsdrohne über das Fixationselement relativ zum Baustellenobjekt in wenigstens einer Dimension festgelegt sein, unabhängig davon, ob Bauarbeiten an einer Decke oder einer Wand auszuführen sind. Selbst wenn in einer normalen Fluglage das Arbeitswerkzeug vertikal nach oben hin ausgerichtet ist, können trotzdem Bauarbeiten an einer Wand ausgeführt werden. Dazu kann die Bauarbeitsdrohne eingerichtet sein, mit Hilfe der Flugplattform auf eine gewünschte Arbeitshöhe zu fliegen, sich der Wand, also dem Baustellenobjekt in diesem Fall, anzunähern und sich mit Hilfe des Fixationselements am Baustellenobjekt, also der Wand, festzulegen. Dann kann zumindest der Endeffektor am Gelenk, beispielsweise um 90 Grad, gekippt werden, so dass das Arbeitswerkzeug von seiner ursprünglich vertikalen Ausrichtung in eine horizontale Ausrichtung gekippt wird. Anschließend kann das Arbeitswerkzeug die gewünschte Bauarbeit an der Wand verrichten. Eine ausreichende Anpresskraft kann beispielsweise mit Hilfe der Flugplattform erzeugt werden.

Besonders bevorzugt kann das Fixationselement steuerbar teleskopierbar sein. Dann kann beispielsweise nach Festlegung der Bauarbeitsdrohne am Baustellenobjekt ein Abstand zwischen dem Arbeitswerkzeug und dem Baustellenobjekt eingestellt werden. Das Arbeitswerkzeug kann beispielsweise durch Verkürzen des Fixationselements dem Baustellenobjekt angenähert werden.

Vorzugsweise weist das Fixationselement ein Haftelement auf. Das Haftelement kann zur Anhaftung am Baustellenobjekt eingerichtet sein. Beispielsweise kann es ein magnetisch wirkendes Haftelement und / oder ein Unterdruck-basiertes Haftelement aufweisen.

Beispielsweise kann das Haftelement einen Saugnapf umfassen. Der Saugnapf kann steuerbar sein. Dazu kann der Saugnapf direkt und / oder indirekt an einen Stellmotor zur Steuerung seiner Saugwirkung und damit seiner Haltewirkung angeschlossen sein. Beispielsweise kann das Haftelement, insbesondere der Saugnapf, ein Ventil aufweisen. Die Bauarbeitsdrohne kann eingerichtet sein, das Ventil zum Ablösen der Bauarbeitsdrohne vom Baustellenobjekt zu öffnen.

Das Haftelement kann lösbar am Fixationselement befestigbar und / oder befestigt sein. Es kann beispielsweise aufgeschraubt sein. Dann kann je nach Material des Baustellenobjekts, insbesondere je nach Art des zu erwartenden Untergrunds, an dem das Haftelement anhaften soll, ein geeignetes Haftelement genutzt werden. Beispielsweise kann zur Verrichtung von Bauarbeiten an Stahltanks ein Magnet-basiertes Haftelement am Fixationselement befestigt und verwendet werden. Zur Verrichtung von Bauarbeiten an glatten Betonwänden kann dagegen ein Unterdruck-basiertes Haftelement, insbesondere ein steuerbarer Saugnapf, am Fixationselement befestigt und verwendet werden.

Das Fixationselement kann wenigstens eine Stützstelle aufweisen. So kann das Fixationselement eine Hebelwirkung in Bezug auf das Haftelement über die Stützstelle entfalten. Die Stützstelle kann ein Haftelement und / oder ein Haftreibungs-verstärkendes Element, beispielsweise eine Gummisohle, aufweisen. Somit kann ein ungewolltes Verrutschen der Bauarbeitsdrohne relativ zum Baustellenobjekt zusätzlich vermieden werden.

Um eine besonders stabile Festlegung am Baustellenobjekt zu ermöglichen, kann die Bauarbeitsdrohne mehrere, insbesondere wenigstens drei, Fixationselemente zur temporären Festlegung zumindest des Endeffektors und / oder der Werkzeugmaschine an dem Baustellenobjekt aufweisen.

Mit der Anzahl einstellbarer Freiheitgrade steigt üblicherweise auch das zu transportierende Gesamtgewicht. Günstig ist es daher, wenn die Werkzeugaufnahme relativ zur übrigen Bauarbeitsdrohne, insbesondere zu wenigstens einem der Haftelemente, mit höchstens 5, insbesondere höchstens 3, einstellbaren Freiheitsgraden einstellbar ist. Insbesondere kann das Justierelement höchstens 4, insbesondere höchstens 2, einstellbare Freiheitsgrade aufweisen. Beispielsweise kann das Justierelement zwei einstellbare Translationsfreiheitsgrade aufweisen. Werden zusätzliche, insbesondere rotatorische, Freiheitsgrade für Bauarbeiten, die wahlweise an Decken als auch an Wänden ausführbar sein sollen, benötigt, können diese durch geeignete Steuerung der Flugplattform bereitgestellt werden. Beispielweise kann die Ausrichtung des Arbeitswerkzeugs durch Einstellung der Fluglage der Flugplattform angepasst werden.

Die Bauarbeitsdrohne kann leitungsgebunden sein. Dazu kann die Bauarbeitsdrohne eine Verbindungsleitung zu einer Basisstation aufweisen. Die Verbindungsleitung kann längenveränderlich, beispielsweise teleskopierbar, dehnbar und / oder auf- beziehungsweise abwickelbar sein. Eine solche Bauarbeitsdrohne kann somit gegen unbeabsichtigtes Wegfliegen geschützt sein.

Über die Verbindungsleitung kann die Bauarbeitsdrohne mit Energie versorgbar sein. Die Energie, mit der die Bauarbeitsdrohne versorgbar ist, ist somit nicht durch begrenzte Speicherkapazitäten oder dergleichen prinzipiell begrenzt.

Alternativ oder ergänzend ist denkbar, dass die Bauarbeitsdrohne über einen Energiespeicher, insbesondere einen elektrischen Speicher und / oder einen Energiefluidspeicher mit Energie versorgbar ist. Der Energiefluidspeicher kann beispielsweise ein Methanol-, Ethanol-, Wasserstoff- oder Methanspeicher sein. Der elektrische Speicher kann beispielsweise ein Hochkapazitätskondensator und / oder eine Akkumulator sein.

In Ergänzung zu den übrigen genannten Merkmalen, aber auch alternativ, insbesondere im Sinne einer separaten Erfindung, ist insbesondere denkbar, dass die Bauarbeitsdrohne sowohl leitungsgebunden ist als auch einen elektrischen Energiespeicher aufweist. Dann können Bauarbeiten, die einen impulsartigen und / oder intervallartigen Betrieb einer Werkzeugmaschine erfordern, ausgeführt werden, indem Energie kurzzeitig im elektrischen Energiespeicher gespeichert wird und bei Bedarf, z. B. zum Setzen eines Nagels mit Hilfe eines Setzgeräts, mit hoher elektrischer Leistung an die Werkzeugmaschine abgegeben wird. Parallel dazu kann mit geringerer Leistung der elektrische Energiespeicher nachgeladen werden. Somit kann die Versorgungsleitung dünn und damit Gewichts-einsparend ausgebildet sein.

Die Verbindungsleitung kann auch eingerichtet sein, Daten zur Bauarbeitsdrohne hin und / oder von der Bauarbeitsdrohne weg zu übertragen. Dazu kann sie ein Datenkabel sein und / oder umfassen. Es können beispielsweise Bild-, Steuerbefehls-, und / oder Sicherheitsinformationen übertragbar sein.

So kann die Bauarbeitsdrohne über längere Zeit unterbrechungsfrei Bauaufgaben verrichten. Dazu kann die Verbindungsleitung eine elektrische Stromleitung aufweisen. Alternativ, insbesondere für den Fall, das in explosionsgefährdeten Bereichen Bauarbeiten auszuführen sind, oder ergänzend kann die Verbindungsleitung auch zur Bereitstellung von Hochdruckfluid, beispielsweise Pressluft, eingerichtet sein. Dazu kann die Verbindungsleitung einen Schlauch aufweisen. In einem solchen Fall kann die Flugplattform Düsen zur Erzeugung des erforderlichen Auftriebs aufweisen. Die Düsen können eingerichtet sein, zum Antrieb der Bauarbeitsdrohne das Hochdruckfluid auszuströmen.

Die Flugplattform kann H-förmig ausgebildet sein. Insbesondere kann die Flugplattform ein längliches Mittelteil aufweisen. Von dem Mittelteil können vier oder mehr Seitenarme mit Antriebselementen, insbesondere Propellern, abragen. Somit ergibt sich ein besonders kompaktes Design der Bauarbeitsdrohne. Im Bereich des Mittelteils kann das Justierelement angeordnet und / oder ausgebildet sein.

Die Flugplattform kann als Multicopter ausgebildet sein. Insbesondere kann sie als Quadrocopter, Hexacopter oder Octacopter ausgebildet sein. Ihre Antriebselemente können eine Fläche von wenigstens 0,5 m² überspannen. Mit einer solchen Fläche, beispielsweise im Bereich von 1 m², kann die Flugplattform eine ausreichend hohe Schubkraft entwickeln. Die Flugplattform kann eingerichtet sein, wenigstens 10 kg Gesamtgewicht, besonders bevorzugt wenigstens 15 kg Gesamtgewicht, tragen zu können. Dies kann besonders wichtig sein, wenn schwere Werkzeugmaschinen wie beispielsweise Hochleistungsbohrhämmer, beispielsweise mit einem Gewicht von mehr als 5kg, einsetzbar sein sollen oder zur effizienten Ausführung der Bauarbeit benötigt werden.

Die maximal von der Flugplattform erzeugbare Schubkraft kann wenigstens 100 N, insbesondere wenigstens 200 N, insbesondere wenigstens 240 N betragen. Eine von der Bauarbeitsdrohne, insbesondere der Flugplattform, maximal erzeugbare Anpresskraft kann mindestens 80 N betragen.

Die Bauarbeitsdrohne kann ein Positionsdetektionssystem aufweisen. Sie kann alternativ oder ergänzend eingerichtet sein, von einem externen Positionsdetektionssystem, beispielsweise eine Totalstation aufweisend, zur Bestimmung einer Position und / oder einer Lage der Bauarbeitsdrohne erfasst zu werden. Dazu kann die Bauarbeitsdrohne wenigstens eine Lokalisationsmarkierung, beispielsweise eine ARUCO-Markierung, aufweisen. Zur Erfassung durch eine Totalstation kann die Bauarbeitsdrohne ein Reflexionselement, beispielsweise ein Reflexionsprisma, aufweisen. Denkbar ist auch, dass das Positionsdetektionssystem einen Beschleunigungssensor aufweist. Das Positionsdetektionssystem kann eingerichtet sein, eine Position und / oder eine Lage mit einem Fehler von höchstens 1 cm, insbesondere von höchstens 0,5 cm, zu erfassen. Vorzugsweise kann die erfasste Position und / oder Lage einer Position und / oder einer Lage des Arbeitswerkzeugs, beispielsweise einer Spitze des Arbeitswerkzeugs, entsprechen.

Alternativ oder ergänzend kann das Positionsdetektionssystem auch ein Satelliten-gestütztes Ortungssystem, beispielsweise GPS- und / oder GLONASS-basiert, aufweisen. Denkbar ist auch, dass das Positionsdetektionssystem alternativ oder ergänzend ein Kamera-basiertes Ortungssystem, beispielsweise mit einer SLAM- (Simultaneous Localization And Mapping)-Einheit, aufweist.

Besonders bevorzugt kann die Bauarbeitsdrohne eingerichtet sein, auszuführende Bauarbeiten und / oder Arbeitspositionen für auszuführende Bauarbeiten einem BIM-Modell, beispielsweise in Form von CAD-Daten, zu entnehmen. Dazu kann die Bauarbeitsdrohne einen Speicher für BIM-Daten aufweisen. Alternativ oder ergänzend kann die Bauarbeitsdrohne auch ein Kommunikationsmodul aufweisen. Das Kommunikationsmodul kann eingerichtet sein, mit einem entfernten Rechnersystem, beispielsweise einer Basisstation und / oder einem Cloud-basierten Rechnersystem, zu kommunizieren. Auf dem entfernten Rechnersystem können BIM-Daten abrufbar gespeichert sein. Somit kann die Bauarbeitsdrohne die BIM-Daten des entfernten Rechnersystems abrufen und sich daraus ergebende Bauaufgaben ausführen.

Die Bauarbeitsdrohne kann ein Planungssystem aufweisen, das eingerichtet ist, aus den BIM-Daten eine Reihenfolge der auszuführenden Bauaufgaben, insbesondere eine Reihenfolge der für diese Bauaufgaben erforderlichen Arbeitspositionen, abzuleiten und die Bauaufgaben in der Reihenfolge an den jeweiligen Arbeitspositionen auszuführen. Dazu kann die Bauarbeitsdrohne eingerichtet sein, der Reihenfolge der Bauaufgaben entsprechend an die jeweiligen Arbeitspositionen zu navigieren.

Die Bauarbeitsdrohne kann eine Steuerung aufweisen. Die Steuerung kann einen Mikrocontroller aufweisen. Der Mikrocontroller kann einen Prozessor und einen Speicher zur Speicherung von auf dem Prozessor ausführbarem Programmcode und / oder zur Speicherung von Daten, beispielsweise von Daten des BIM-Modells, aufweisen. Der Mikrocontroller kann auch eine Kommunikationsschnittstelle zur Kommunikation mit dem entfernten Rechnersystem aufweisen. Die Kommunikationsschnittstelle kann funkbasiert sein. Alternativ kann sie auch kabelgebunden sein.

Alternativ oder ergänzend kann die Steuerung auch eingerichtet sein, die Flugplattform zu steuern. Insbesondere kann die Steuerung zur Positions- und / oder zur Lageregelung durch die Flugplattform eingerichtet sein.

Das Planungssystem und / oder das Kommunikationsmodul kann durch den Mikrokontroller ausgebildet sein. Dazu kann der Programmcode eingerichtet sein, dass, wenn er auf dem Prozessor ausgeführt wird, die vorangehend beschriebenen Funktionen des Planungssystems und / oder des Kommunikationsmoduls durch Mikrocontroller ausgeführt werden.

Die Bauarbeitsdrohne kann unabhängig vom Fixationselement auch ein oder mehrere Standfüße aufweisen. So kann die Bauarbeitsdrohne beispielsweise auf den Standfüßen stehend starten oder landen.

Weist das Fixationselement standardmäßig in eine horizontale Richtung, so kann die Bauarbeitsdrohne im Flug in horizontaler Richtung mithilfe des Fixationselements an das Baustellenobjekt andocken.

Als zusätzliches Sicherheitsmerkmal kann die Bauarbeitsdrohne auch eine Umhüllung, beispielsweise einen Käfig, aufweisen. Insbesondere können die Antriebselemente der Bauarbeitsdrohne jeweils eine individuelle und / oder eine gemeinsame Umhüllung aufweisen. Somit können Verletzungsrisiken während des Betriebs der Bauarbeitsdrohne, insbesondere durch die Antriebselemente, reduziert werden. Dies kann insbesondere auf Baustellen, auf denen sich regelmäßig mehrere Personen in unterschiedlichen Richtungen bewegen, besonders vorteilhaft sein.

Als weiteres Sicherheits- und / oder Komfortmerkmal kann auch vorgesehen sein, dass die Bauarbeitsdrohne eine Saugvorrichtung und / oder Störstoffsammelvorrichtung aufweist und / oder an eine solche angeschlossen ist. Somit kann beispielsweise ein Ausbreiten und eine Verteilung von bei Ausführung der Bauarbeit entstehenden Staubpartikeln vermieden werden, sodass auf der Baustelle befindliche Personen und / oder befindliches Material oder Geräte vor Beeinträchtigungen durch derartige Staubpartikel geschützt werden können. Die Störstoffsammelvorrichtung kann auch ausgebildet sein, während der Ausführung der Bauarbeit heraus- und / oder herunterfallende Gegenstände aufzufangen. Somit können beispielsweise herausbrechende Gesteinsbrocken oder abgebrochene Teile des Arbeitswerkzeugs aufgefangen werden. Dazu kann die Störstoffsammelvorrichtung eine Auffangvorrichtung, beispielsweise ein Fangnetz, insbesondere unterhalb der Werkzeugmaschine und / oder unterhalb des Arbeitswerkzeugs, aufweisen.

Ein besonders flexibler Einsatz ergibt sich, wenn die Bauarbeitsdrohne eingerichtet ist, einen Zustand des Arbeitswerkzeugs zu detektieren. Dazu kann die Bauarbeitsdrohne eine Bildaufnahmeeinheit aufweisen.

Denkbar ist auch, dass die Bauarbeitsdrohne eingerichtet ist, das Arbeitswerkzeug in die Werkzeugaufnahme einzusetzen oder sogar selbsttätig gegen ein zweites Arbeitswerkzeug zu tauschen. Dazu kann die Werkzeugmaschine einen Steuerantrieb aufweisen, der eingerichtet ist, die Werkzeugaufnahme zu öffnen und / oder zu schließen.

Die Bauarbeitsdrohne kann ein Arbeitswerkzeug-Magazin aufweisen, in dem wenigstens ein solches zweites Arbeitswerkzeug aufnehmbar ist.

Vorteilhaft ist auch, beispielsweise wenn die Werkzeugmaschine ein Setzgerät und / oder das Arbeitswerkzeug ein Setzwerkzeug, beispielsweise ein Schraubbit, ist, wenn in einem Setzelemente-Magazin zu verarbeitende Elemente, beispielsweise zu setzende Anker oder Nägel, aufnehmbar sind. Die Bauarbeitsdrohne kann eingerichtet sein, die Werkzeugmaschine mit wenigstens einem im Setzelemente-Magazin enthaltenen Element zu bestücken. Dann können nacheinander mehrere der Elemente gesetzt, beispielsweise Schraubanker in das Baustellenobjekt eingeschraubt oder Nägel in das Baustellenobjekt eingeschlagen, werden, so dass auf Zwischenlandungen oder ähnliche Unterbrechungen, um die Bauarbeitsdrohne manuell zu bestücken, verzichtet werden kann.

Die Bauarbeitsdrohne kann auch wenigstens eine Verstellsicherung aufweisen. Die Verstellsicherung kann eingerichtet sein, das Gelenk steuerbar zu blockieren. Die Verstellsicherung kann beispielsweise einen Schieber, insbesondere einen stiftförmigen Schieber, aufweisen. Dann kann während eines Fluges und / oder während der Ausführung einer Bauarbeit die Blockierung aktiviert werden, beispielsweise der Schieber in zugehörige Ausnehmungen im Gelenk eingeschoben werden, um das Gelenk in seiner jeweiligen Stellung zu blockieren. Die Blockierung kann aufgehoben werden, wenn der Flug bzw. die Bauarbeit beendet ist. Somit kann ein ungewolltes Verstellen des Gelenks vermieden werden.

Ein besonderer Vorzug der Bauarbeitsdrohne ist dabei, dass sie mit einer geringen Anzahl an Aktuatoren auskommen kann. Dies kann dadurch erreicht werden, indem längere Translationen und / oder Rotationen des Arbeitswerkzeugs und / oder die Erzeugung von Kräften, beispielsweise der notwendigen Anpresskraft, zumindest zu einem überwiegenden Teil, mit Hilfe der Flugplattform, insbesondere mit den Antriebseinheiten, realisiert werden.

In den Rahmen der Erfindung fällt des Weiteren ein **Verfahren zur Ausführung einer Bauarbeit an einem Baustellenobjekt,** insbesondere an einer Decke und / oder an einer Wand, wobei eine Bauarbeitsdrohne nach der vorangehend und / oder nachfolgend beschriebenen Art verwendet wird. Verfahrensgemäß nähert sich die Bauarbeitsdrohne dem Baustellenobjekt fliegend an, bis das Fixationselement das Baustellenobjekt kontaktiert. Das Fixationselement dockt am Baustellenobjekt an. Die Position eines in der Werkzeugaufnahme aufgenommenen Arbeitswerkzeugs wird relativ zur übrigen Bauarbeitsdrohne und / oder relativ zum Baustellenobjekt mit Hilfe des Justierelements eingestellt und die Bauarbeit wird mit Hilfe des Arbeitswerkzeugs ausgeführt.

Auswirkungen von Störeinflüssen, beispielsweise Windstöße, auf die Bauarbeitsdrohne können reduziert werden. Insbesondere kann das Fixationselement die Bauarbeitsdrohne zumindest in einer Dimension relativ zum Baustellenobjekt festlegen. Die Position des Arbeitswerkzeugs kann dann mit Hilfe des Justierelements korrigiert werden. Somit kann auch bei erheblichen Störeinflüssen eine gewünschte Arbeitsposition präzise erreicht und über die Dauer der Ausführung der Bauarbeit bei Bedarf aufrechterhalten werden.

Um einen ausreichenden Vortrieb zu erzeugen, kann der für die Ausführung der Bauarbeit erforderliche Vortrieb mit Hilfe der Flugplattform generiert werden. Der Vortrieb kann durch den Schub der Antriebselemente der Flugplattform, also beispielsweise der Propeller, erzeugbar sein.

Zur Ausführung von Bauarbeiten an einer Wand kann die Bauarbeitsdrohne, insbesondere der Endeffektor oder zumindest das Arbeitswerkzeug, beispielsweise an dem Gelenk, um einen bestimmten Umklappwinkel, beispielsweise zwischen 80 und 100 Grad, insbesondere um ca. 90 Grad, umgeklappt werden. Somit kann das Arbeitswerkzeug auf das zu bearbeitende Baustellenobjekt, in diesem Fall also die Wand, ausgerichtet werden.

Das Umklappen kann mit Unterstützung der Flugplattform erfolgen.

Startet die Bauarbeitsdrohne von einem Startplatz aus in einer Start-Fluglage, beispielsweise mit einem vertikal nach oben weisenden Arbeitswerkzeug, so kann die Flugplattform zur Ausführung der Bauarbeit an dem Baustellenobjekt, insbesondere einer Bauarbeit an einer Wand, um wenigstens 70 Grad, insbesondere um 80 bis 100 Grad, beispielsweise um 90 Grad, aus der Start-Fluglage heraus um eine Horizontale gedreht werden, sodass das Arbeitswerkzeug auf das Baustellenobjekt, in diesem Fall also die Wand, ausgerichtet wird.

Eine solche Bauarbeitsdrohne mit in der Startlage vertikal nach oben weisendem Arbeitswerkzeug kann auch für Bauarbeiten, bei denen vertikal nach unten gerichtet zu arbeiten ist, beispielsweise für Arbeiten an einer Oberseite eines Daches verwendet werden, indem die Bauarbeitsdrohne aus ihrer Start-Fluglage heraus um beispielsweise 180 Grad um die Horizontale gedreht wird, also sozusagen "auf den Kopf" gedreht wird. Daher kann das Verfahren vorsehen, dass die Flugplattform zur Ausführung der Bauarbeit um wenigstens 150 Grad, insbesondere um 160 bis 200 Grad, aus der Start-Fluglage heraus um die Horizontale gedreht wird.

Zusammenfassend kann also eine Bauarbeit an einem Baustellenobjekt ausgeführt werden, in dem die Bauarbeitsdrohne das Baustellenobjekt anfliegt, vorzugsweise an dieses andockt, vorzugsweise, insbesondere wenn das Baustellenobjekt eine Wand oder eine vertikal nach unten zu bearbeitende Fläche aufweist, um wenigstens 70 Grad, insbesondere um 90 Grad beziehungsweise um 180 Grad, aus der Start-Fluglage heraus um die Horizontale dreht, das vorzugsweise Arbeitswerkzeug mit Hilfe des Justierelements feinpositioniert, die jeweilige Bauaufgabe an der gewünschten Arbeitsposition ausführt, gegebenenfalls abdockt und anschließend eine nächste Bauaufgabe ausführt oder, falls keine weitere Bauaufgabe mehr auszuführen ist, vorzugsweise wieder landet.

Das Verfahren kann auch eine Planungsphase umfassen, in der die Bauarbeitsdrohne ein oder mehrere Bauaufgaben von einem externen Rechnersystem abruft. Die Bauaufgabe oder die Bauaufgaben können als BIM-Modell, beispielsweise in Form von CAD-Daten, erhalten werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: eine Bauarbeitsdrohne in einer perspektivischen Darstellung;
- Fig. 2: die Bauarbeitsdrohne in einer Seitenansicht;
- Fig. 3: die Bauarbeitsdrohne in einer umgeklappten Stellung in einer Seitenansicht;
- Fig. 4: die Bauarbeitsdrohne in einer perspektivischen Darstellung von schräg oben;
- Fig. 5: eine schematische Ansicht auf die Bauarbeitsdrohne von oben und
- Fig. 6: ein Flussdiagramm eines Verfahrens zur Ausführung einer Bauarbeit.

In der nachfolgenden Beschreibung der Figuren werden zur Erleichterung des Verständnisses der Erfindung für gleiche oder sich funktional entsprechende Elemente jeweils die gleichen Bezugszeichen verwendet.

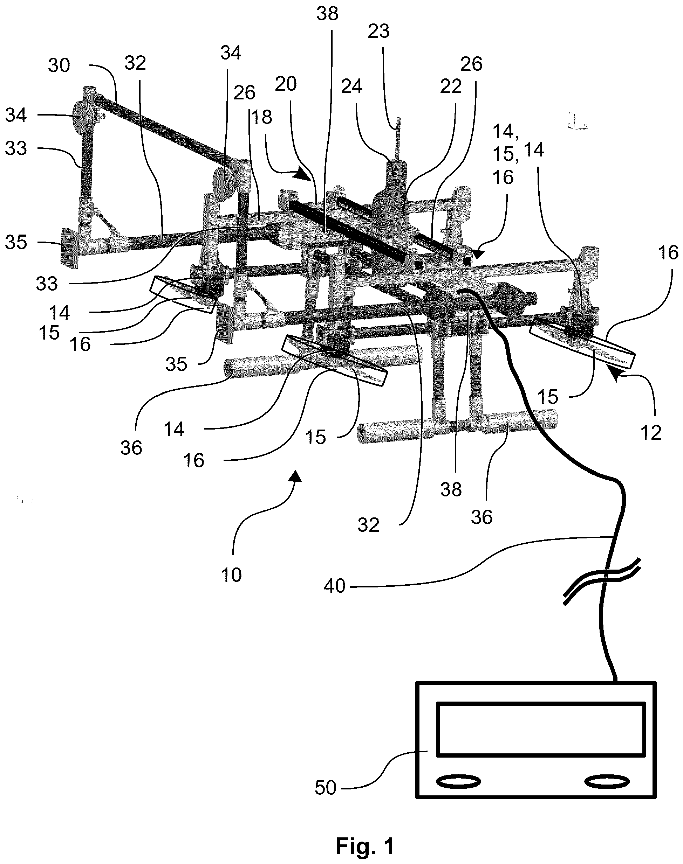

**Fig. 1** zeigt eine Bauarbeitsdrohne **10** zur Ausführung einer Bauarbeit an einem Baustellenobjekt. Die Bauarbeitsdrohne 10 weist eine Flugplattform **12** auf.

Die Flugplattform 12 ist als Quadrocopter ausgebildet. Dazu weist sie vier Antriebselemente **14** auf. Die Antriebselemente 14 weisen Propeller **15** auf. Die Propeller 15 sind jeweils einzeln in Käfigen **16** (in Fig. 1 lediglich schematisch scheibenförmig dargestellt) gekapselt. Die Käfige 16 sind als Gitter ausgebildet und erlauben somit einen Durchfluss von Luft.

An der Flugplattform 12 ist ein Endeffektor **18** angeordnet. Der Endeffektor 18 weist einen Kreuztisch **20** auf.

Am Kreuztisch 20 ist eine Werkzeugmaschine **22** angeordnet. Ein Arbeitswerkzeug **23** ist in einer Werkzeugaufnahme **24** der Werkzeugmaschine 22 aufgenommen.

Im vorliegend beschriebenen Ausführungsbeispiel soll als auszuführende Bauaufgabe an einer Arbeitsposition einer Stahlbetonwand ein Loch gebohrt werden. Dazu ist das Arbeitswerkzeug 23 als Hammerbohrer zum Bohren von Gestein, insbesondere Stahlbeton, ausgebildet. Die Werkzeugmaschine 22 ist eine, vorzugsweise elektropneumatische, Bohrhammermaschine.

Der Kreuztisch 20 ist als XY-Tisch mit zwei einstellbaren Freiheitsgraden ausgebildet. Er weist zwei Linearführungselemente **26** auf, sodass die Werkzeugmaschine 22 in zwei Dimensionen, insbesondere in einer Ebene, bewegbar ist. Der Kreuztisch 20 bildet somit ein Justierelement, mit dem eine relative Position zwischen dem Arbeitswerkzeug 23 und der Flugplattform 12 einstellbar ist.

Die Bauarbeitsdrohne 10 weist ferner ein Fixationselement **30** auf. Das Fixationselement 30 ist eingerichtet, ein Baustellenobjekt (in Fig. 1 nicht dargestellt) zumindest temporär so zu kontaktieren, dass wenigstens der Endeffektor 18 und damit auch das Arbeitswerkzeug 23 relativ zum Baustellenobjekt in wenigstens einer Dimension zumindest temporär festgelegt ist.

Das Fixationselement 30 weist zwei Tragarme **32** auf. An den Enden der Tragarme 32 sind Hebelarme **33** mit Halteelementen **34** ausgebildet. Die Halteelemente 34 sind in Form von steuerbaren Saugnäpfen ausgebildet. Die Halteelemente 34, also die Saugnäpfe, sind motorisch steuerbar, so dass die Saugwirkung beziehungsweise ein in oder an den Saugnäpfen herrschender Unterdruck und damit die Haftwirkung der Halteelemente 34 einstellbar ist. Um die Ablösezeit weiter zu verringern, weisen die Halteelemente 34 auch jeweils ein steuerbares Ventil auf.

An den Halteelementen 34 gegenüberliegenden Enden der Hebelarme 33, insbesondere an freien Enden der Tragarme 32, befinden sich Abstützelemente **35.** Die Abstützelemente 35 sind aus einem rutschfesten Material, beispielsweise einem Gummi, ausgebildet.

Die Tragarme 32, und damit das Fixationselement 30, sind teleskopierbar. Insbesondere sind sie in der in Fig. 1 gezeigten Ausgangsstellung verkürzbar als auch verlängerbar.

Des Weiteren weist die Bauarbeitsdrohne 10 zwei Standfüße **36** auf. Die Standfüße 36 sind nach unten gerichtet und reichen insbesondere bis unter die Antriebselemente **14.**

In der in Fig. 1 gezeigten Ausgangsstellung ragen die Standfüße 36 zumindest im Wesentlichen vertikal nach unten. Das Fixationselement 30 ragt dagegen zumindest im Wesentlichen horizontal von der übrigen Bauarbeitsdrohne 10 ab.

Das Fixationselement 30 ist über Gelenke **38** an der übrigen Bauarbeitsdrohne 10 angelenkt.

Die Bauarbeitsdrohne 10 ist leitungsgebunden. Dazu führt eine Verbindungsleitung **40** von der Bauarbeitsdrohne 10 zu einer Basisstation **50.** Die Verbindungsleitung 40 umfasst ein Stromkabel sowie eine Datenleitung. Die Basisstation **50** ist zur Stromversorgung der Bauarbeitsdrohne 10 eingerichtet. Sie weist dazu entsprechende elektrische Energiespeicher auf. Denkbar ist auch, dass die Bauarbeitsdrohne 10 über die Verbindungsleitung 40 an eine externe Stromversorgung anschließbar ist. Beispielsweise kann die Bauarbeitsdrohne 10 über das Stromkabel der Verbindungsleitung 40 an ein elektrisch betriebenes Fahrzeug (in Fig. 1 nicht dargestellt) anschließbar sein.

Die Basisstation 50 ist ferner eingerichtet, die Bauarbeitsdrohne 10 zu steuern. Beispielsweise kann die Basisstation 50 eingerichtet sein, ein Startkommando und / oder ein Landekommando an die Bauarbeitsdrohne 10 zu übermitteln.

Die Bauarbeitsdrohne 10 kann dabei eingerichtet sein, nach Erhalt des Startkommandos selbständig von einem Untergrund aus und / oder einer Start- und / oder Landevorrichtung zu starten und eine Bauaufgabe auszuführen. Sie kann alternativ oder ergänzend eingerichtet sein, nach Erhalt des Landekommandos selbständig an einer, insbesondere vorbestimmten, Stelle, insbesondere auf der Start- und / oder Landevorrichtung, auf der Baustelle zu landen.

Die Bauarbeitsdrohne 10 ist somit eingerichtet, Bauarbeiten sowohl an Decken als auch an Wänden ausführen zu können. Allgemein ist sie somit eingerichtet, Bauarbeiten auszuführen, für die das Arbeitswerkzeug 23 vertikal und / oder horizontal auszurichten ist.

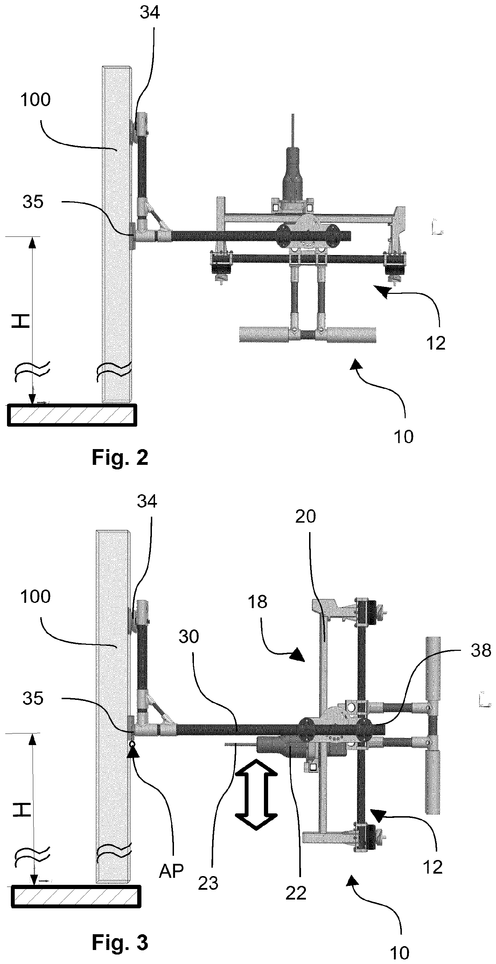

Anhand der nachfolgend näher erläuterten Fig. 2 und Fig. 3 wird ein Andock- und Ausrichtvorgang der Bauarbeitsdrohne 10 veranschaulicht.

**Fig. 2** zeigt dazu die Bauarbeitsdrohne 10 in einer ersten Seitenansicht.

Vereinfachend sind in Fig. 2 sowie der anschließend näher erläuterten Fig. 3 die Verbindungsleitung 40 (siehe Fig. 1), die Basisstation 50 (siehe Fig. 1) sowie die Propeller 35 (siehe Fig. 1) nicht dargestellt.

Die Bauarbeitsdrohne 10 befindet sich an einer Wand **100,** zu der sie sich zuvor selbsttätig angenähert hat. Die Wand 100 kann aus Stahlbeton ausgebildet sein. Mit ihren Halteelemente 34 hat sie an die Wand 100 angedockt. Insbesondere haben sich die Halteelemente 34 an der Wand 100 festgesogen.

Die Abstützelemente 35 kontaktieren ebenfalls die Wand 100.

Mit Hilfe ihrer Flugplattform 12 hat die Bauarbeitsdrohne 10 die in Fig. 2 dargestellte Arbeitshöhe **H** erreicht.

**Fig. 3** zeigt die Bauarbeitsdrohne 10 in einer zweiten, umgeklappten Stellung.

Diese umgeklappte Stellung wurde ausgehend von der Stellung gemäß Fig. 2 erreicht, indem der Endeffektor 18 bzw. ein den Endeffektor 18 umfassender Teil der Bauarbeitsdrohne 10 relativ zum Fixationselement 30 an den Gelenken 38 rotiert worden ist. Das für die Rotation erforderliche Drehmoment sowie die für die anschließende Ausführung der Bauarbeit notwendige Anpresskraft werden durch geeignete Steuerung der Flugplattform 12 erzeugt.

Um ein unbeabsichtigtes Verstellen zu vermeiden, sind die Gelenke 38 mit Hilfe einer als Schieber ausgebildeten Verstellsicherung (in Fig. 3 aus Darstellungsgründen nicht erkennbar) gesichert. Zudem wirken Haltemomente von Motoren des Kreuztisches 20 einem unerwünschten Verstellen zusätzlich entgegen.

Somit ist in Fig. 3 die Werkzeugmaschine 22 mitsamt dem Arbeitswerkzeug 23 zur Wand 100 hin ausgerichtet.

Mithilfe des Kreuztischs 20 kann das Arbeitswerkzeug 23 in einer vertikalen sowie einer zur Bildebene gemäß Fig. 3 senkrechten Dimension versetzt werden. Beispielhaft in Fig. 3 eine solche mögliche Translationsbewegung der Werkzeugmaschine 22 mit dem Arbeitswerkzeug 23 mit einem Pfeil markiert. Somit kann das Arbeitswerkzeug 23 feinpositioniert werden, um ein Bohrloch präzise an einer gewünschten Arbeitsposition **AP** zu bohren.

Ist das Arbeitswerkzeug 23 hinreichend präzise, beispielsweise mit einer Abweichung von höchstens 0,5 cm oder, besonders bevorzugt höchstens 0,2 cm, feinpositioniert, so kann das zu erstellende Bohrloch an der Arbeitsposition AP gebohrt und damit die auszuführende Bauaufgabe ausgeführt werden, indem das teleskopierbare Fixationselement 30 bei laufender Werkzeugmaschine 22 verkürzt wird, wodurch das Arbeitswerkzeug 23 zur Arbeitsposition AP hin verlagert wird, bis es sich in die Wand 100 bohrt. Eine für das Bohren erforderliche Anpresskraft kann durch Steuerung von Richtung und / oder Stärke der Schubkraft der Flugplattform 12 erzeugt werden. Das Fixationselement 30 kann Längensensoren aufweisen zur Messung der jeweiligen Länge des Fixationselements 30. Somit kann die Ausführung der Bauaufgabe, hier des Bohrens, präzise gesteuert werden. Insbesondere ist somit eine Steuerung der Tiefe der anzufertigenden Bohrung möglich.

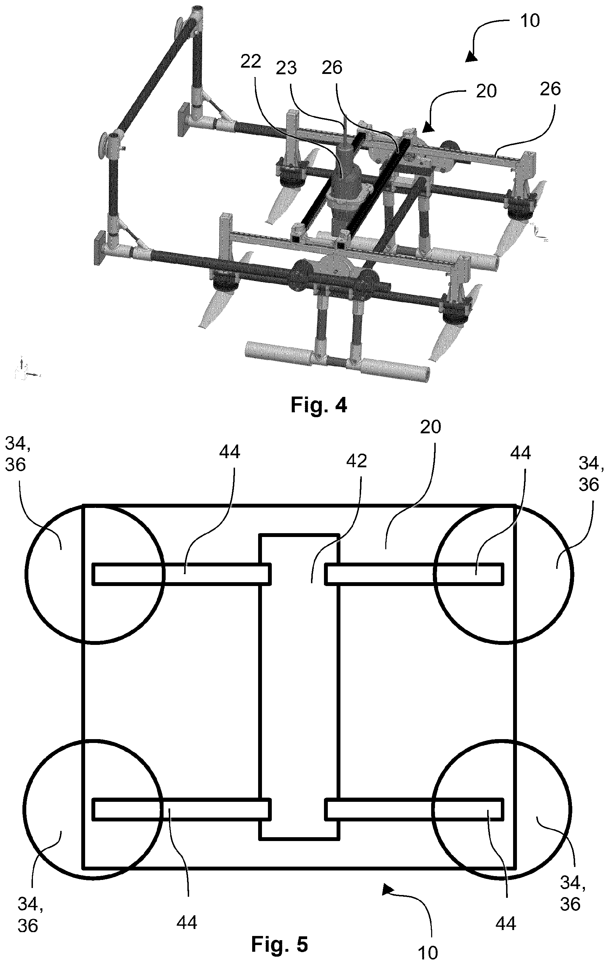

**Fig. 4** zeigt in einer perspektivischen Darstellung die Bauarbeitsdrohne von schräg oben. Insbesondere zeigt sie den Kreuztisch 20. Zu erkennen sind insbesondere die beiden Linearführungselemente 26, mit denen die Werkzeugmaschine 22 und das Arbeitswerkzeug 23 verstellbar sind.

**Fig. 5** zeigt die Bauarbeitsdrohne 10 in einer stark schematisierten Ansicht von oben. Zu erkennen ist, dass die Bauarbeitsdrohne 10 H-förmig ausgebildet ist. Sie weist ein Mittelteil **42** auf, an dem der Kreuztisch 20 (in Fig. 5 lediglich schematisch dargestellt) montiert ist. An Seitenarmen **44** ragen jeweils die Antriebselemente 34 mit ihren Käfigen 36 seitlich vom Mittelteil 42 ab.

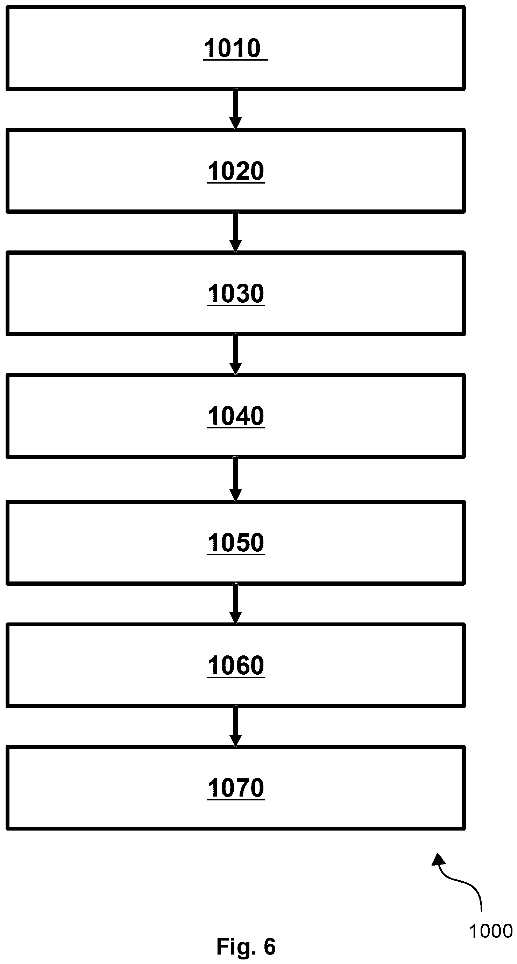

**Fig. 6** zeigt ein Verfahren **1000** zur Ausführung einer Bauarbeit an einem Baustellenobjekt.

Das Verfahren eignet sich insbesondere zur Ausführung von Bauarbeiten an Decken, Dachflächen und / oder Wänden.

Das Verfahren 1000 wird wiederum am Beispiel des Bohrens eines Loches an der Arbeitsposition AP der Wand 100 beschrieben.

In einer Anflugphase **1010** fliegt die Bauarbeitsdrohne 10 von einem Startplatz zum Baustellenobjekt, in diesem Beispiel also zur Wand 100. Sie fliegt dazu bis auf die Arbeitshöhe H. Der Flug kann in ihrer Start-Fluglage erfolgen; sie kann also die Lage beibehalten, in der sie vom Startplatz abgehoben ist, insbesondere wenn der Startplatz horizontal ausgerichtet ist. Für die weitere Darstellung des Verfahrens wird beispielhaft davon ausgegangen, dass das Arbeitswerkzeug 23 in der Start-Fluglage vertikal nach oben weist, also entsprechend der Darstellung gemäß Fig. 1 oder Fig. 2.

Die Arbeitshöhe H ist so gewählt, dass, wie nachfolgend noch näher erläutert, das Arbeitswerkzeug 23 so mit Hilfe des Kreuztisches 20 feinpositioniert und mit Hilfe des teleskopierbaren Fixationselements 30 verlagert werden kann, dass es später die Arbeitsposition AP erreicht.

Anschließend dockt die Bauarbeitsdrohne 10 in einer Andockphase **1020** an das Baustellenobjekt, also die Wand 100, an, in dem sie sich mit Hilfe der Halteelemente 34 an der Wand 100 festsaugt und jedenfalls somit das Fixationselement 30 die Wand 100 kontaktiert.

In einer Ausrichtphase **1030** wird der Endeffektor 18 und damit die Werkzeugmaschine 22 mit dem Arbeitswerkzeug 23 um die Gelenke 38 um ca. 90 Grad aus der Start-Fluglage heraus um die Horizontale gedreht. Somit wird das Arbeitswerkzeug 23 horizontal ausgerichtet, sodass es durch horizontale Translation zur Wand 100 hin bewegbar ist und in diese das gewünschte Loch bohren kann.

Anschließend wird in einer Justierphase **1040** das Arbeitswerkzeug 23 mit Hilfe des Kreuztisches 20 feinpositioniert und damit auf die gewünschte Arbeitsposition AP ausgerichtet.

Anschließend kann die jeweils gewünschte Bauaufgabe in einer Arbeitsphase **1050** ausgeführt werden. Dem Beispiel folgend kann dazu mit Hilfe der Flugplattform 12 horizontaler Schub aufgebaut werden, sodass sich das teleskopierbare Fixationselement 30 verkürzt, das Arbeitswerkzeug 23 an der Arbeitsposition AP aufsetzt und an dieser das gewünschte Loch bohrt.

Durch teilweise Schubumkehr kann nach Abschluss des Bohrvorgangs das Arbeitswerkzeug 23 aus dem Loch herausgezogen werden.

Zur Vorbereitung eines nachfolgenden Abflugs kann sich die Bauarbeitsdrohne 10 am Ende der Arbeitsphase 1050 wieder zurück in eine der Start-Fluglage entsprechende Stellung zurückdrehen.

In einer Abdockphase **1060** können die Halteelemente 34 von der Wand 100 gelöst werden, sodass die Bauarbeitsdrohne 10 von dem Baustellenobjekt, also gemäß dem Beispiel die Wand 100, abdockt.

Abschließend kann die Bauarbeitsdrohne 10 in einer Abflugphase **1070** zu einer weiteren Arbeitsposition fliegen, um dort eine weitere Bauaufgabe auszuführen oder - falls keine weitere Bauaufgabe auszuführen ist, landen.

### Bezugszeichenliste

- 10: Bauarbeitsdrohne
- 12: Flugplattform
- 14: Antriebselemente
- 15: Propeller
- 16: Käfig
- 18: Endeffektor
- 20: Kreuztisch
- 22: Werkzeugmaschine
- 23: Arbeitswerkzeug
- 24: Werkzeugaufnahme
- 26: Linearführungselement
- 30: Fixationselement
- 32: Tragarm
- 33: Hebelarm
- 34: Halteelement
- 35: Abstützelement
- 36: Standfuß
- 38: Gelenk
- 40: Verbindungsleitung
- 42: Mittelteil
- 44: Seitenarm
- 50: Basisstation
- 100: Wand
- 1000: Verfahren
- 1010: Anflugphase
- 1020: Andockphase
- 1030: Ausrichtphase
- 1040: Justierphase
- 1050: Arbeitsphase
- 1060: Abdockphase
- 1070: Abflugphase
- H: Arbeitshöhe
- AP: Arbeitsposition

## Patentansprüche

1. **Bauarbeitsdrohne** (10) zur Ausführung einer Bauarbeit an einem Baustellenobjekt, insbesondere einer Wand (100) und / oder einer Decke, umfassend
- eine Flugplattform (12),
- ein an der Flugplattform (12) angeordneter und / oder ausgebildeter Endeffektor (18), wobei der Endeffektor (18) eine Werkzeugaufnahme (24) zur Aufnahme eines Arbeitswerkzeugs (23) aufweist,
wobei die Bauarbeitsdrohne (10) ein Justierelement mit wenigstens einem einstellbaren Freiheitsgrad aufweist, das eingerichtet ist, eine relative Position und / oder Lage zwischen der Werkzeugaufnahme (24) und der Flugplattform (12) einzustellen, und
- ein Fixationselement (30), das eingerichtet ist, das Baustellenobjekt zumindest temporär so zu kontaktieren, dass wenigstens der Endeffektor (18) oder die Werkzeugaufnahme (24) relativ zum Baustellenobjekt in wenigstens einem Freiheitsgrad zumindest temporär, vorzugsweise während einer Ausführung der Bauarbeit, festgelegt ist.

2. Bauarbeitsdrohne nach dem vorhergehenden Anspruch, **dadurch gekennzeichnet, dass** das Justierelement wenigstens zwei einstellbare Freiheitsgrade aufweist.

3. Bauarbeitsdrohne nach einem der vorhergehenden Ansprüche, **dadurch gekennzeichnet, dass** das Justierelement einen Arm, insbesondere mit wenigstens zwei einstellbaren Freiheitsgraden, aufweist.

4. Bauarbeitsdrohne nach einem der vorhergehenden Ansprüche, **dadurch gekennzeichnet, dass** das Justierelement einen Kreuztisch (20) aufweist.

5. Bauarbeitsdrohne nach einem der vorhergehenden Ansprüche, **dadurch gekennzeichnet, dass** das Fixationselement (30) an der übrigen Bauarbeitsdrohne (10) über ein Gelenk (38) angelenkt ist.

6. Bauarbeitsdrohne nach einem der vorhergehenden Ansprüche, **dadurch gekennzeichnet, dass** das Fixationselement (30) ein Haftelement (34), das zur Anhaftung am Baustellenobjekt eingerichtet ist, beispielsweise ein magnetisch wirkendes Haftelement und / oder ein Unterdruck-basiertes Haftelement, aufweist.

7. Bauarbeitsdrohne nach einem der vorhergehenden Ansprüche, **dadurch gekennzeichnet, dass** die Bauarbeitsdrohne (10) mehrere, insbesondere wenigstens drei, Fixationselemente (30) zur temporären Festlegung zumindest des Endeffektors (18) und / oder der Werkzeugmaschine (22) an dem Baustellenobjekt aufweist.

8. Bauarbeitsdrohne nach einem der vorhergehenden Ansprüche, **dadurch gekennzeichnet, dass** die Werkzeugaufnahme (24) relativ zur übrigen Bauarbeitsdrohne (10), insbesondere zu dem Haftelement (34), mit höchstens 5, insbesondere höchstens 3, einstellbaren Freiheitsgraden einstellbar ist.

9. Bauarbeitsdrohne nach einem der vorhergehenden Ansprüche, **dadurch gekennzeichnet, dass** die Bauarbeitsdrohne (10) leitungsgebunden ist, insbesondere eine Verbindungsleitung (40) aufweist.

10. Bauarbeitsdrohne nach einem der vorhergehenden Ansprüche, **dadurch gekennzeichnet, dass** die Flugplattform (12) H-förmig ausgebildet ist.

11. **Verfahren (1000) zur Ausführung einer Bauarbeit an einem Baustellenobjekt,** insbesondere an einer Decke und / oder an einer Wand (100),
- wobei eine Bauarbeitsdrohne (10) nach einem der vorhergehenden Ansprüche verwendet wird,
- wobei die Bauarbeitsdrohne (10) dem Baustellenobjekt fliegend angenähert wird, bis das Fixationselement (30) das Baustellenobjekt kontaktiert,
- wobei das Fixationselement (30) am Baustellenobjekt andockt,
- wobei die Position eines in der Werkzeugaufnahme (24) aufgenommenen Arbeitswerkzeugs (23) relativ zur übrigen Bauarbeitsdrohne (10) und / oder relativ zum Baustellenobjekt mit Hilfe des Justierelements eingestellt wird,
- wobei die Bauarbeit mit Hilfe des Arbeitswerkzeugs (23) ausgeführt wird.

12. Verfahren nach dem vorhergehenden Anspruch, **dadurch gekennzeichnet, dass** der für die Ausführung der Bauarbeit erforderliche Schub oder zumindest ein Teil des Schubes mit Hilfe der Flugplattform (12) generiert wird.

13. Verfahren nach einem der beiden vorhergehenden Ansprüche, **dadurch gekennzeichnet, dass** die Flugplattform (12) zur Ausführung der Bauarbeit um wenigstens 70 Grad, insbesondere um 80 bis 100 Grad, aus einer Start-Fluglage heraus um eine Horizontale gedreht wird.

14. Verfahren nach einem der beiden vorhergehenden Ansprüche, **dadurch gekennzeichnet, dass** die Flugplattform (12) zur Ausführung der Bauarbeit um wenigstens 150 Grad, insbesondere um 160 bis 200 Grad, aus der Start-Fluglage heraus um die Horizontale gedreht wird.
